# EUROPEAN PATENT APPLICATION

(11) **EP 4 475 584 A1**
(43) Date of publication of application: **11.12.2024**
(21) Application number: 23177982.8
(22) Date of filing: 07.06.2023
(51) Int. Cl.: H04W 24/02, H04L 41/0894

(54) **HETEROGENEOUS NETWORK, HETEROGENEOUS NETWORK CONTROLLER AND METHOD TO OPERATE A HETEROGENEOUS NETWORK**

(71) Applicant: Siemens Aktiengesellschaft, 80333 München (DE)
(72) Inventor: Bhadauria, Shubhangi, 81477 München (DE); Kornbichler, Andreas, 83623 Dietramszell (DE); Richerzhagen, Björn, 85055 Ingolstadt (DE)
(74) Representative: Siemens Patent Attorneys

(57) **Abstract**

The invention relates to a heterogeneous network (5) wherein the heterogeneous network (5) comprises a first network (4) according to a first radio access technology and a second network (8) according to a second radio access technology, the networks comprising a respective network controller. The heterogeneous network (5) comprises a Heterogeneous network controller (1) configured to generate an orchestration policy (9) for resource management depending on first operation data (2) and second operation data (6) and to provide the orchestration policy (9) at least to a network controller of the first network (4). The network controller of the first network (4) is configured to allocate the network resources of the first network (4) according to the orchestration policy (9).

## Description

The invention is concerned with a heterogeneous network, a heterogeneous network controller and a method to operate a heterogeneous network.

Wireless networks may be operated in parallel. A heterogeneous network is defined as a composition of wireless networks of different radio access technologies. Wireless networks comprise respective controllers, configured to allocate network resource of the respective network. However the network controllers are not configured to allocate network resource over different wireless networks to enable a co-existence of the networks.

US 2021/0204148 A1 describes a real time intelligent RAN controller to support self-driving OPEN RAN. The document describes a message exchange between 5G-SON and O-CU-CP for enabling the SON execution in a 5G system.

US 2021/0258866 A1 describes resource allocation and activation/deactivation configuration of Open RAN Network Slice subnets. The document discloses a signaling and message exchange for allocating resources efficiently within non-real time RIC.

However, both do not discuss extending the O-RAN architecture with new interfaces or introduce any new signaling for enabling co-existence.

It is an object of the present invention to provide a solution for orchestrating networks of different radio access technologies in a heterogeneous network.

A general idea of the invention is to orchestrate the resource allocation of different networks of a heterogeneous network in order to get the networks of the heterogeneous network to work together. The general solution is to provide a heterogeneous network-controller of the heterogeneous network, which, through different interfaces and architectural layouts, ensures that (virtual) radio resources and Quality of Service (QoS) requirements are met at each network layer of the heterogeneous network.

A first aspect of the invention is concerned with the heterogeneous network, wherein the heterogeneous network comprises a first network according to a first radio access technology and at least one second network according to a respective second radio access technology. The first network and the at least one second network may comply with the same or different radio access technologies. Each of the networks comprises a respective network controller, configured to allocate network resources of the respective network for data transmission within the respective wireless network. The radio access technologies may comprise Bluetooth, Wi-Fi, GSM, UMTS, LTE or 5G. The network controllers may be configured to allocate network resources of the respective network according to a Radio Resource Management strategy for the network.

The heterogeneous network comprises a heterogeneous network controller. The heterogeneous network controller may be a hardware or a software module, configured to orchestrate the networks of the heterogeneous network.

The heterogeneous network controller is configured to receive first operation data of the first network according to the first radio access technology wherein the first operation data describe available network resource and/or requested network resource of the first network according to the first of the radio access technologies. The available network resource may comprise capabilities of the first network like an available frequency spectrum of the network and/or a bandwidth of the first network. The requested network resource may comprise an amount of data to be transferred via the first network. The first operation data of the first network may be provided by the network controller of the first network.

The heterogeneous network controller is configured to receive respective second operation data of the at least one second network according to the second radio access technology wherein the second operation data describe available network resource and/or requested network resource of the respective at least one second network according to the second of the radio access technologies. The available network resource may comprise capabilities of the second network like an available frequency spectrum of the second network and/or a bandwidth of the second network. The requested network resource may comprise an amount of data to be transferred via the second network. The second operation data of the second network may be provided by the network controller of the second network.

The heterogeneous network controller is configured to generate an orchestration policy for resource management of the heterogeneous network as a function of the first operational data and the second operational data. The orchestration policy may be a policy for the respective network controllers to allocate the network resource of the respective network depending on the operational data of the other network to achieve orchestration between the operations of the networks of the heterogeneous network. The orchestration policy may be generated according to a predefined method. The orchestration policy may define respective spectra for the respective networks. The orchestration policy may optimise the operation of the respective networks in parallel.

The heterogeneous network controller is configured to provide the orchestration policy to at least the network controller of the first network. In other words, the heterogeneous network controller is configured to transmit the orchestration policy to the at least one controller of the first network to enable operation of the first network in accordance with the second network.

The network controller of the first network may create and/or adapt the radio resource management strategy for the first network according to the orchestration policy.

The network controller of the first network is configured to allocate the network resources of the first network according to the orchestration policy. This can be done by defining a radio resource management strategy by the network controller of the first network that meets the requirements of the orchestration policy. In other words, the network controller of the first network is configured to perform the allocation of the network resource of the first network in line with the orchestration policy. The allocation of the network resource of the first network may depend on the requirements of user equipment within the first network and the Radio Resource Management strategy, which depends on the orchestration policy. The network controller is configured to allocate the network resource within the network according to the orchestration policy.

The invention has the advantage that the allocation of the network resource of the first network is carried out according to the orchestration policy which is generated depending on the requirements of the first network and the requirements of the second network. It is therefore possible to optimise the allocation of the network resources of the first network for coexistence with the at least one second network.

According to a further embodiment of the invention, the heterogeneous network-controller is configured to provide the orchestration policy to the network controller of the at least one second network, and the network controller of the at least one second network is configured to allocate the network resources of the second network according to the orchestration policy. It is therefore possible to optimise the allocation of the network resources of the second network for coexistence with the first network.

According to a further embodiment of the invention, the network controller of one of the networks is configured as the heterogeneous network controller. In other words the orchestration of the networks of the heterogeneous network is performed by the network controller of the first network of the heterogeneous network or the network controller of the at least one second network of the heterogeneous network. The invention has the advantage that the orchestration of the networks is performed by the already existing network controller of one of the networks. It is therefore not necessary to provide an additional device to enable the orchestration.

According to a further embodiment of the invention, the heterogeneous network controller is configured as a group of network controllers of the networks. In other words the heterogeneous network controller comprises at least two of the network controllers. The heterogeneous network controller may be configured as a logical instance operated by the group of network controllers. The invention has the advantage that the orchestration policy may be generated by network controllers of the respective networks of the heterogeneous network. This may allow a better consideration of the requirements of the respective networks or the respective radio access technologies in the orchestration than is the case with a single network controller.

According to a further embodiment of the invention at least the first network is structured according to an ORAN-architecture. In other words the first network of the heterogeneous network is a 5G-Network that is structured according an architecture of an Open Radio Access Network (OR_AN). The heterogeneous network controller is configured as a network function of a near-real time RIC of the first network. In other words the heterogeneous network controller is a virtual network function operated in the near-real time Open R_AN Intelligent Controller (RIC) of the first network.

The embodiment has the advantage, that the orchestration is performed in an instance that is configured for real time control and optimization of the first network. This may enable an inclusion of real time functions of the first network in the orchestration.

According to a further embodiment of the invention the heterogeneous network-controller comprises a near-real time heterogeneous network-controller configured to generate a near-real time orchestration policy of the orchestration policy for resource management for at least one of the networks depending on the operation data provided by the networks and a non-real time heterogeneous network-controller configured to formulate a non-real time orchestration policy of the orchestration policy for resource management for at least one of the networks depending on the operation data provided by the networks. In other words the heterogeneous network-controller comprises the near-real time heterogeneous network-controller to orchestrate near-real time operation of the networks and a non-real time heterogeneous network-controller configured to orchestrate non-real time operation of the networks.

The near-real time heterogeneous network-controller may be configured to provide the near-real time orchestration policy to orchestrate the resource allocation by the network controllers in sub-frame, slot level for 3GPP compliant technology or in units of seconds.

The non-real time heterogeneous network-controller may be configured to provide the non-real time orchestration policy to orchestrate the resource allocation by the network controllers in a longer time scale e.g., in minutes or hours depending on the type of an artificial intelligence (AI) algorithm or a machine learning (ML) algorithm running to formulate a long-term orchestration policy for the overall network.

According to a further embodiment of the invention the at least one second network is structured according to ORAN-architecture, wherein the at least one second network comprises a near-real time RIC. The near-real time RIC of the at least one second network is connected to the near-real time RIC of the first network through a near-real time interface. The near -real time RIC of the second network is configured to provide near-real time operation data of at least one network to the near -real time RIC of the first network.

According to a further embodiment of the invention the at least one second network comprises a non-real time RIC. The non-real time RIC of the at least one second network is connected to a non-real time RIC of the first network through a non-real time interface. The non-real time RIC of the second network is configured to provide non-real time operation data of at least one network to the non -real time RIC of the first network.

According to a further embodiment of the invention the first network comprises a positioning network function in the near-real time RIC of the first network. The positioning network function is configured to locate a device connected to at least one of the networks and to provide a location of the device to the heterogeneous network controller. The heterogeneous network controller is configured to generate the orchestration policy depending on the location provided by the positioning network function. The embodiment has the advantage that the orchestration may be optimized depending on the respective location of the device. This may enable predictive allocation of network resources depending on a current or future location of the device.

According to a second aspect of the invention a heterogeneous network controller of a heterogeneous network is provided. The heterogeneous network controller is configured to receive first operation data of the first network according to the first radio access technology wherein the first operation data describe available network resource and/or requested network resource of the first network according to the first of the radio access technologies. The available network resource may comprise capabilities of the first network like an available frequency spectrum of the network and/or a bandwidth of the first network. The requested network resource may comprise an amount of data to be transferred via the first network. The first operation data of the first network may be provided by the network controller of the first network.

The heterogeneous network controller is configured to receive respective second operation data of the at least one second network according to the second radio access technology wherein the second operation data describe available network resource and/or requested network resource of the respective at least one second network according to the second of the radio access technologies. The available network resource may comprise capabilities of the second network like an available frequency spectrum of the second network and/or a bandwidth of the second network. The requested network resource may comprise an amount of data to be transferred via the second network. The second operation data of the second network may be provided by the network controller of the second network.

The heterogeneous network controller is configured to generate an orchestration policy for resource management of the heterogeneous network as a function of the first operational data and the second operational data. The orchestration policy may be a policy for the respective network controllers to allocate the network resource of the respective network depending on the operational data of the other network to achieve orchestration between the operations of the networks of the heterogeneous network. The orchestration policy may be generated according to a predefined method. The orchestration policy may define respective spectra for the respective networks. The orchestration policy may optimise the operation of the respective networks in parallel.

The heterogeneous network controller is configured to provide the orchestration policy to at least the network controller of the first network. In other words, the heterogeneous network controller is configured to transmit the orchestration policy to the at least one controller of the first network to enable operation of the first network in accordance with the second network.

According to a third aspect of the invention a method to operate a heterogeneous network is provided. The heterogeneous network comprises a first network according to a first radio access technology and at least one second network according to a second radio access technology. The first and the at least one second network comprise respective network controllers.

The method comprises the following steps performed by a heterogeneous network controller of the heterogeneous network.

A first step of the method comprises a reception of first operation data of the first network according to the first of the radio access technologies wherein the first operation data describe available network resource and/or requested network resource of the first network according to the first of the radio access technologies.

A second step comprises a reception of second operation data of the at least one second network according to the second of the radio access technologies wherein the second operation data describe available network resource and/or requested network resource of the at least one second network according to the second of the radio access technologies.

A third step comprises a generation of an orchestration policy for resource management depending on the first operation data and the second operation data.

A fourth step comprises provision of the orchestration policy at least to the network controller of the first network.

A sixth step comprises a configuration of network resource of the first network according to the orchestration policy by the network control of the first network.

The invention also encompasses combinations of the features of the described embodiments. Thus, the invention also encompasses realizations each having a combination of the features of more than one of the described embodiments, provided that the embodiments have not been described as mutually exclusive.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

Examples of embodiments of the invention are described below. For this purpose, the drawings show in
- FIG 1: a schematic illustration of the heterogeneous network-controller;
- FIG 2: a schematic illustration of a heterogeneous network;
- FIG 3: a schematic illustration of another heterogeneous network;
- FIG 4: a schematic illustration of a heterogeneous network wherein the heterogeneous network-controller is provided by two networks;
- FIG 5: a schematic illustration of a heterogeneous network controller configured as a network function;
- FIG 6: another schematic illustration of a heterogeneous network controller configured as a network function;
- FIG 7: another schematic illustration of a heterogeneous network controller configured as a network function; and
- FIG 8: a schematic illustration of a method to operate a heterogeneous network.

The following embodiments represent preferred examples of the present invention.

In the figures the same elements are indicated by the same reference signs.

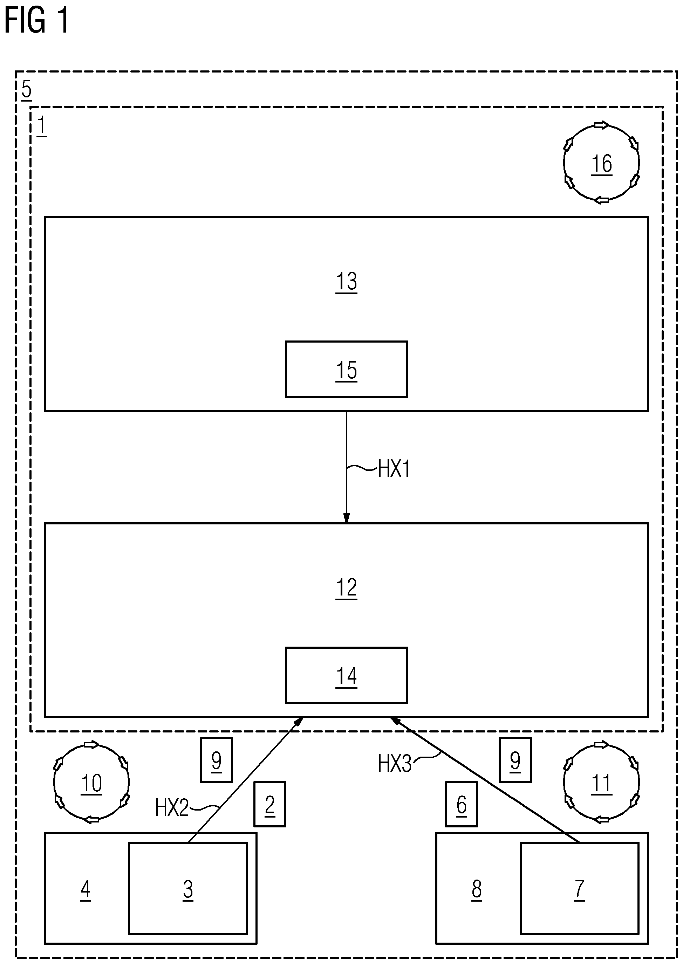

FIG 1 shows a schematic illustration of the heterogeneous network-controller.

A first idea is to make heterogeneous wireless networks work together. The solution is to have a heterogeneous network controller 1 that, through different interfaces and architectural layouts, can ensure that virtual radio resources and QoS requirements are met at each network layer.

The heterogeneous network controller 1 may be configured to receive first operation data 2 of a first network controller 3 of a first network 4 of the heterogeneous network 5 via a first interface HX2. The first operation data 2 may comprise information about available network resource of the first network 4 and requested network resource of the first network 4.

The heterogeneous network controller 1 may be configured to receive second operation data 6 of from a second network controller 7 of a second network 8 of the heterogeneous network 5 via a second interface HX2. The second operation data 6 may comprise available network resource and/or requested network resource of the second network 8.

The first operation data 2 may be provided with the predefined first update rate 10 and the second operation data 6 may be provided by the second update rate 11. The update rates 10, 11 may depend on the radio access technology of the respective network 4, 8.

The heterogeneous network controller 1 may be configured to generate an orchestration policy 9 to orchestrate an operation of the networks 4, 8 of the heterogeneous network 5. The orchestration policy 9 may be based on the operation data 2, 6 provided by the network controllers 3, 7 of the networks 4, 8. The orchestration policy 9 may be generated by the heterogeneous network controller 1 according to a predefined method to optimise the operation of the networks in parallel.

The heterogeneous network controller 1 may comprise a near-real time heterogeneous network controller 12 configured to generate a near-real time orchestration policy 14 of the orchestration policy 9. The near-real time orchestration policy 14 may be generated by the near-real time heterogeneous network controller 12 depending on the operation data 2, 6, provided by the network controllers 3, 7 of the networks 4, 8. The generation of the near-real time orchestration policy 14 may be based on the whole operation data 2, 6 or near-real time operation data of the operation data 2, 6.

The heterogeneous network controller 1 may comprise a non-real time controller configured 13 to generate a non-real time orchestration policy 15 of the orchestration policy 9 based on the near-real time orchestration policy 14. The operation data 2, 6 of the respective networks 4, 8 may be provided to the non-real time heterogeneous network controller 13 through a third interface HX1 of the heterogeneous network controller 1 connecting the non-real time heterogeneous network controller 15 to the near-real time heterogeneous network controller 14. The non-real time heterogeneous network controller 15 may update the non-real time orchestration policy 15 with a predefined update rate 16. The near-real time orchestration policy 12 may be generated depending on the non-real time orchestration policy 13. The non-real time orchestration policy 15 may depend on a long time observation of the operation data 2, 6.

The Heterogeneous Network controller 1, conceptually similar to the Non-Real-time RIC in O-RAN, helps to formulate the long-term policy for the type of service or application that the User Equipment UE or the network can/can support.

The heterogeneous network controller 1, conceptually similar to the near-real-time RIC in O-RAN, helps to formulate a policy that helps either the network or the UE to achieve the desired Quality of Service QoS requirements for the supported application or service.

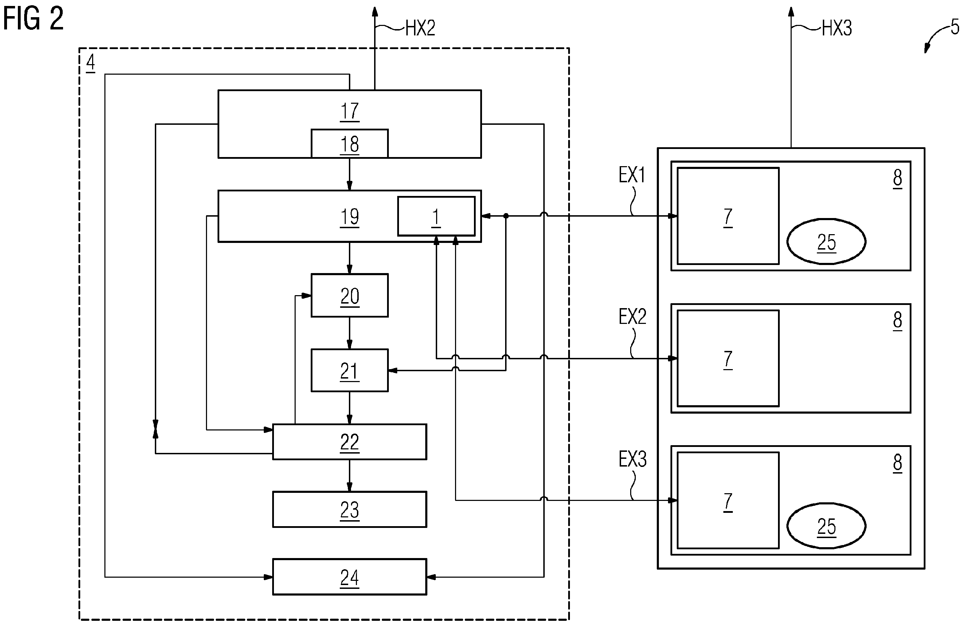

Open-Radio Access Network OR_AN: The ORAN architecture extended with the proposed co-existence application as shown in Figure 2 to allow the 5G control plane to consider other existing wireless networks available in a service area for efficient radio resource management.

The heterogeneous network controller 1 is compatible with non-3GPP devices like any other sensor or wireless technology that is either not standardised or not part of the 3GPP standards.

HX1, HX2, HX3 are the proposed novel interfaces that help to exchange the defined policies, the available input data from OR_AN and non-3GPP to both, the non-real time heterogeneous network controller 13 and the near-real time heterogeneous network controller 12.

The near-real time heterogeneous network controller 12 may have an update rate in sub-frame, slot level for 3GPP compliant technology or in units of seconds.

The non-real time heterogeneous network controller may have an update rate that can be longer in terms of time scale, e.g. minutes or hours, depending on the type of AI\ML algorithm being run to formulate a long-term policy for the whole network.

FIG 2 shows a schematic illustration of a heterogeneous network 5.

The heterogeneous network 5 may comprise a first network 4 according to a first radio access technology. The first radio access technology may be 5G. The first network 4 may be structured according to ORAN-architecture. The heterogeneous network 5 may comprise more second networks 8 wherein the second networks 8 are configured to respective second radio access technologies. The second networks 8 may comprise respective network controllers 7. The second radio access technologies may comprise 5G, 4G, LTE, Bluetooth, Wi-Fi or other technologies.

The network resource of the first network 4 may be allocated by the network controller 3 of the first network 4. The network controller 3 may comprise a near-real time RIC 19 of the first network 4. The network controllers 7 of the second networks 8 may be connected to the near-real time RIC 19 of the first network 4 through respective interfaces Ex1, Ex2, Ex3. The network controllers 7 of the second networks 8 may provide operation data 6 to the near-real time RIC 19 of the first network 4 through the interfaces Ex1, Ex2, Ex3. The operation data 6 may comprise available network resource of the respective second network 8 and/or requested network resource of the respective second network 8. The network controller 3 of the first network 4 may provide operation data 2 comprising available network resource of the first network 4 and/or requested network resource the first network 4 to an network function operated in the near-real time RIC 19 of the first network 4.

The network function may be the heterogeneous network controller 1. The heterogeneous network controller 1 may be configured to generate the orchestration policy 9 to orchestrate the allocation of network resource between the networks 4, 8 of the heterogeneous network 5. The heterogeneous network controller 1 may provide the orchestration policy 9 to the network controller 3 of the first network 4 and/or the network controllers 7 of the second networks 8. The network controllers 3, 7 may allocate network resource of the respective network 4, 8 according to the orchestration policy 9. The orchestration policy 9 may be generated depending on QoS-values provided by the operation data 2, 6. The heterogeneous network controller 1 may translate QoS-values between the different networks 4, 8.

The technical problem addressed here is how different wireless networks can co-exist and how to control them both centrally and in a distributed manner. The underlying network architecture assumed and extended may be that of a 5G System, more specifically following the O-RAN architecture. A heterogeneous network 5 comprising different RATs may be available for communication, as in a factory scenario. The RATs may comprise 5G-NR or Wi-Fi along with other non-RAT sensors. To control different non-RAT sensors and heterogeneous RATs available an extension of the O-RAN architecture will be needed along with a heterogeneous network controller 1 for all networks to achieve the QoS requirements e.g., of latency, reliability, and communication service availability. Core concept is a collaboration and coordination among different RATs and non-RAT sensors.

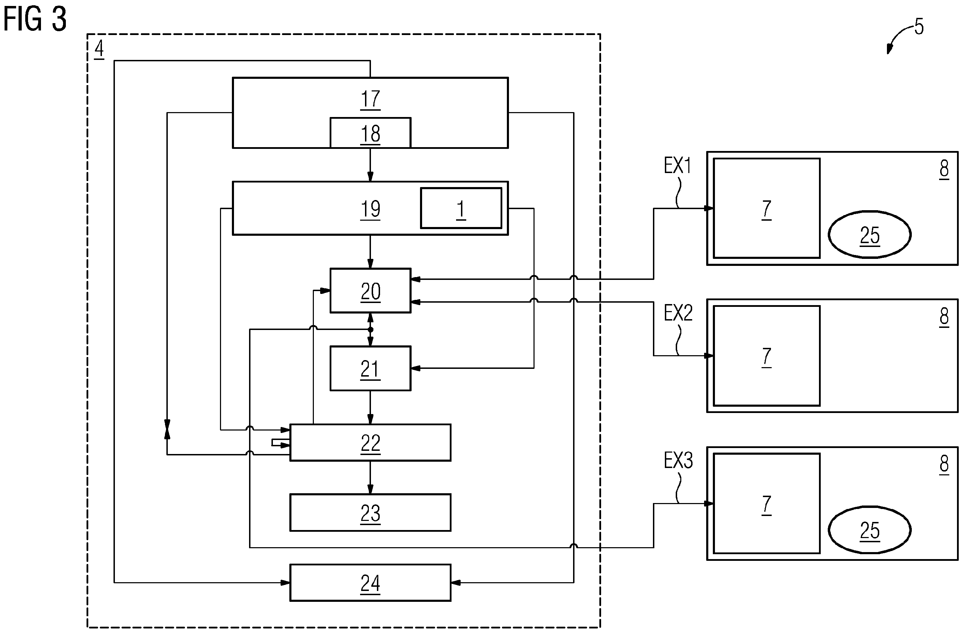

The extension part of the overall Heterogeneous Meta-controller is to expand the architecture of O-RAN itself to enable other wireless and wired technology to work together with the 5G RAN. This feature can be enabled via a Coexistence App. In FIG 3 a centralized control of the problem is shown i.e., all the interfaces are connected to the O-CU 29-CP 20 so that the base-station is aware of the other RAT and non-RAT occupied virtual resources denoting for example, reserved resources, planned future transmissions, QoS associated to each RAT and non-RAT messages i.e., prioritization depending on the application being supported. In this example, decision making takes place in the 5G part of the network i.e., on the RIC within the coexistence app as in FIG 2 and/or on the O-CU 29-CP 20 as in FIG 3 based on information provided by or requested from other RATs via the Ex-interface. When the Ex-interface is connected to the coexistence app then the existing 3GPP Rel. 15 onwards protocols/ interfaces can remain the same. This also implies that for different network objectives such as spectrum access, resource management and coordination the different applications including Co-existence app within the same RIC can interact with each other. Another alternative is that 5G RAN can distribute the formulated policy between different RATs.

The components in FIG 2 and FIG 3 which are newly defined comprise

The heterogeneous network controller 1, designed as a Coexistence App in near-real time heterogeneous network controller. The co-existence app may also provide defined features such as QoS mapping function from non-3GPP based RAT/ Industrial sensor networks to 5QIs and vice-versa, Operational licensed or unlicensed bands, Spectrum sensing or monitoring.

The Ex-interfaces Ex1, Ex2, Ex3 may be bi-directional. Ex1 interface may be provided for connecting the heterogeneous network controller 1 to a 3GPP trusted DU 30 as the second network controller 7. The RAT may be W-LAN, which may be 5G-Core compatible and has authentication to access the core network.

Ex2 interface may be provided for connecting the heterogeneous network controller 1 to non-3GPP trusted DU 30 as the second network controller 7 like WLAN, Bluetooth which might not have the authentication to access the 5G-Core but do occupy 29 virtual radio resources.

Ex3 interface I, SMx may be provided for connecting the heterogeneous network controller 1 to wired DU 30 as the second network controller 7 that may be 5G-Core compatible and have their own QoS requirements to be met.

FIG 3 shows a schematic illustration of another heterogeneous network 5.

FIG 3 shows another heterogeneous network 5. The first network 4 may be structured according to Oran architecture. Interfaces Ex1, Ex2, Ex3 connecting the network controllers 7 of the respective second networks 8 may be connected to the O-CU-CP 20 of the first network 4. The operation data may be sent to the O-CU-CP 20 of the first network 4 and provided to the heterogeneous network controller 1 operating in the near-real time RIC 19 of the first network 4.

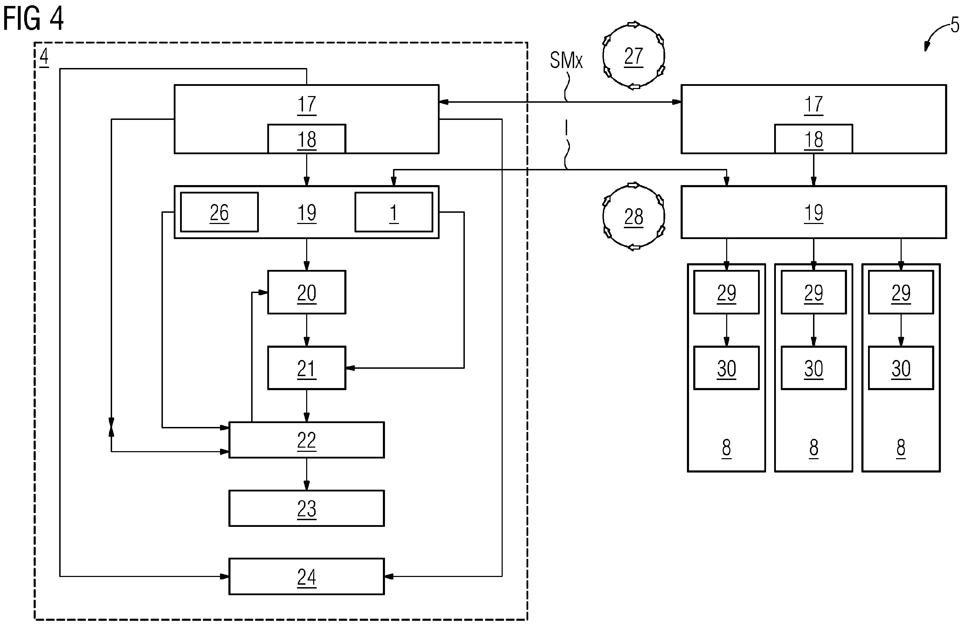

FIG 4 shows a schematic illustration of a heterogeneous network 5 wherein the heterogeneous network controller is provided by two networks.

This problem of orchestration may also be handled in a distributed manner, where decision making is not handled solely by the Coexistence App on the 5G side, but where multiple network controllers exchange information and agree on policies jointly, relying on execution and decision mechanisms that are specific to the respective RAT.

FIG 4 here depicts another architecture layout of O-RAN where the non-RAT sensors are coordinated with a separate O-RAN architecture layout with non-RT RIC and near RT RIC interfaced I, SMx with O-RAN RAT architecture layout.

Both of the networks 4, 8 may be structured according to Oran structure. The second network 8 may be configured to connect devices according to different radio access technologies. The second network 8 may comprise a near-real time RIC 19 and a non-real time RIC 18. The near-real time RIC 19 may be configured to allocate network resource of the respective second network 8.

The heterogeneous network controller 1 may be configured as a logical heterogeneous network controller 1 comprising the near-real time RIC 19 and the non-real time RIC 18 of the first network 4 and the near-real time RIC 19 and the non-real time RIC 18 of the second network 8. The near-real time RIC 19 of the first network 4 may comprise a location function 29, configured to locate devices within the first network 4 or the second networks 8. The location function may be configured to provide the locations of the devices to the heterogeneous network controller 1. The heterogeneous network controller 1 may allocate network resource of the respective networks 4, 8 depending on the location is provided by the location function 26.

The components in FIG 4 which are newly defined:
Coexistence App in Near RT-RIC enabling the heterogeneous RAT and non-RAT sensors working together.

Positioning App 26 in Near RT-RIC for location services to be carried out if needed. This App can communicate with Coexistence App for e.g., via service bus or API ID. The positioning App can also have access to more real time data of localization available i.e., more real time raw sensor data instead of the localization information from the 5G-Core via the Localization Management Function (LMF). Architecture Extension for O-RAN

Update Rate 27 for the SMx interface SMx can be in the scale of minutes, hours or have or power saving like update rate with on-off durations as in Discontinuous Reception DRX Update Rate 28 for near-real time RIC 19 can be in the scale of slot level, sub-frame level or have or power saving like update rate with on-off durations as in Discontinuous Reception DRX.

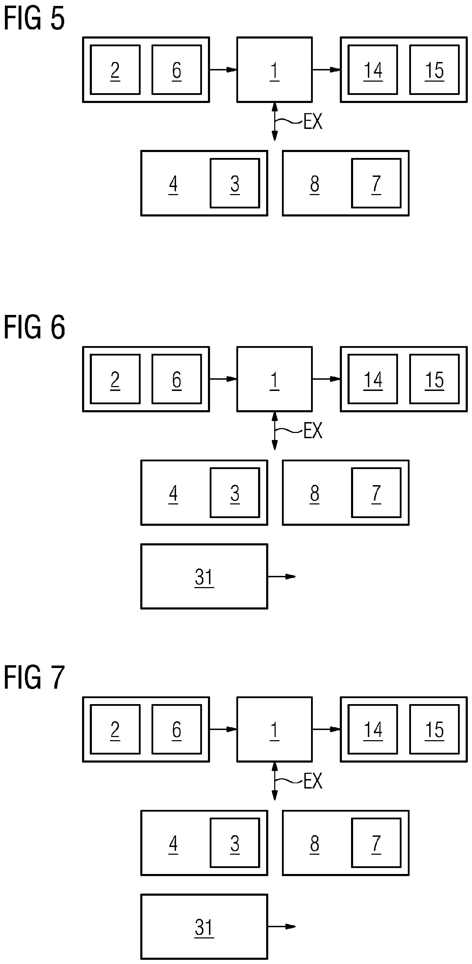

FIG 5 shows a schematic illustration of a heterogeneous network controller configured as a network function.

The heterogeneous network controller 1 may be configured as a network function. The heterogeneous network controller 1 as depicted in FIG 5 may rely on the operation data 2, 6 comprising information on available bands like spectrum resources for a multi-radio access technology network at a given site or area, e.g., availability of locally licensed spectrum for campus networks (e.g., 3.7-3.8 GHz in Germany), or the decision to utilize shared bands (e.g., 2.4 GHz or 6 GHz band). This information may be used in conjunction with dynamic signal strength indicators provided to the heterogeneous network controller 1 via the Ex-interface for each of the network 4, 8 of the individual radio access technology type or additional information on current utilization of the utilized or assigned frequency bands. This information may be used by the heterogeneous network controller 1 to configure and select frequency band across the radio technologies (e.g., allocate distinct bands to distinct technologies (5G, WIFI), or allow some spatial reuse depending on the network topology). Interference information can also be used to mitigate effects on other (non-communication) wireless signals, e.g., reference signals used for localization.

A service continuity aspect between the first network 4 configured as a Public Mobile Network (PLMN) to the second network 8 configured as a Non-Public Network (NPN) may be associated to the use case involving mobility. As an example one of the networks 4, 8 may be a Non-Public Network (NPN) of a factory. An automated guided vehicle or a mobile user entity 31 moving inside the factory may use spectrum resources of the first network 4, configured as the Non-Public Network. However, when the automated guided vehicle or the mobile user entity 31 moves outside a coverage area of the first network 4, configured as the Non-Public Network, for example outside the factory or geo-graphical area where the second network 8, configured as the Public Network is set up, it may need to switch to the available network 4, 8, configured as the Public Mobile Network. Here, the heterogeneous network controller 1, configured as the network function may inform the available public network 8 of the respective radio access technology before the handover happens that the automated guided vehicle or the mobile user entity 31 would need resources for communication or non-communication services. Hence, it may help in avoiding packet dropping or radio link failure.

FIG 6 shows another schematic illustration of a heterogeneous network controller configured as a network function.

The heterogeneous network controller 1 may be configured as a network function. The heterogeneous network controller 1 as depicted in FIG 6 may be utilized for QoS optimization across networks 4, 8 using multiple access technologies. As an input, the heterogeneous network controller 1 may receive operation data 2, 6 comprising information on configured QoS flows from the networks 4, 8 of different individual technologies. This information may be provided by each technologies' network controller 3, 7 individually or directly from an overarching control entity such as the SMO or even by the application directly or via the SMO in the form of intents. This information may be used by the heterogeneous network controller 1 to optimize RAN resource configuration across access technologies, which could include frequency band selection/assignment as detailed for heterogeneous network controller 1 of FIG 5, or (re-)configuration of technology specific QoS mechanisms (e.g., for 5G: how 5QIs are mapped to scheduling decisions and resource block allocations on a gNB, or for wired networks how TSN flows are mapped to the physical network infrastructure). Intention of heterogeneous network controller 1 of FIG 6 may be to maintain a technology-agnostic view on the overall QoS flow requirements to allow for overarching optimization and later mapping to technology-specific features and configurations.

FIG 7 shows another schematic illustration of a heterogeneous network controller configured as a network function.

The heterogeneous network controller 1 may be configured as a network function. The heterogeneous network controller 1 as depicted in FIG 7, may be used for spectrum sensing. heterogeneous network controller 1 of FIG 7 may basically, work the other way around as the heterogeneous network controller 1 of FIG 5. It may be used to gather information on channel status and frequency use, collisions, etc. from different radio technologies (e.g., relying on RSRP, RSSI for 5G, RTS/CTS mechanism in WLAN, or others) and bundling them into a holistic picture that can then be utilized for cross-technology scheduling optimization or even application-layer monitoring and decision making (e.g., by providing timely information on (wireless) resource utilization and load/performance to a digital twin of the network). A 5G RAN based specific example where heterogeneous network controller 1 of FIG 7 may already play a role is NR Sidelink communication. NR Sidelink communication works in the ITS 5.9 GHz band which is also shared by IEEE 802.11p. Therefore, the automated guided vehicle or the mobile user entity via spectrum sensing must ensure that it does not transmit or block the resources that IEEE 802.11p for resource allocation. Here, the heterogeneous network controller 1 via the Ex-interface can provide the network a better overview of the assigned 5.9 GHz band. In this way the network can provide resource pool configuration to the automated guided vehicle or the mobile user entity that can make the radio resource selection process more efficient.

The implementation of the heterogeneous network controller 1 could be realized in one way as different versions of the heterogeneous network controller 1 handling different features as shown in FIG 5, FIG 6, and FIG 7. Or it could be realized as one heterogeneous network controller 1 that contains different container within the same heterogeneous network controller 1.

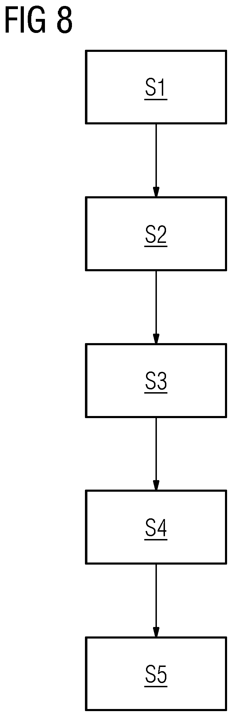

FIG 8 shows a schematic illustration of a method to operate a heterogeneous network 5.

In a first step S1 the first network controller 3 of the first network 4 of the heterogeneous network 5 may generate first operation data 2 of the first network 4. The first operation data 2 may comprise network resource requested in the first network 4 and/or network resources available in the first network 4. The first operation data 2 may comprise requested QOS parameters by devices or applications. The first operation data 2 of the first network 4 may be provided to the heterogeneous network controller 1 by the first network controller 3.

In a second step S2 the second network controller 7 of the second network 8 of the heterogeneous network 5 may generate second operation data 6 of the second network 8. The second operation data 6 may comprise network resource requested in the second network 8 and/or network resources available in the second network 8. The second operation data 6 may comprise requested QoS parameters by devices or applications.

The second operation data 6 of the second network 8 may be provided to the heterogeneous controller by the second network 8 controller 7.

The radio access technology of the second network 8 may be a different radio access technology to the radio access technology of the first network 4.

The operation data 2, 6 of the networks 4, 8 of the heterogeneous network 5 may be received by the heterogeneous network controller 1 in a third step S3. It may be necessary to orchestrate the location of network resource of the networks 4,8 to allow an operation of the networks 4, 8 of the heterogeneous network 5 in parallel. This may be necessary to allow a communication through the different networks 4, 8 or to avoid interference between the networks 4, 8 of the heterogeneous network 5. The heterogeneous network controller 1 may generate an orchestration policy 9 to orchestrate the allocation of the network resource of the networks 4, 8. The heterogeneous network controller 1 may send the orchestration policy 9 to the network controllers 3, 7 of the respective networks 4, 8 of the heterogeneous network 5.

In a fourth step S4 the first network controller 3 of the first network 4 may receive the orchestration policy 9 and allocate network resource of the first network 4 according to the orchestration policy 9.

In a fifth step S5 the second network controller 7 of the second network 8 may receive the orchestration policy 9 and allocate the network resource of the second network 8 according to the orchestration policy 9.

Orchestration of the two networks allows an operation of the two networks in parallel.

The solution may enable the interworking of available sensors or products including LAN based services to be connected to the 5G-system. The heterogeneous network controller 1 can view even 5G system as another wireless sensor. Hence, the overall efficiency of the use case in sight can be increased in terms of at least required latency, reliability, and communication service availability.

Using a specific Coexistence app on the O-RAN RIC would allow for more fine-grained resource coordination in terms of information being exchanged and the time scale / frequency of information exchange between different radio access technologys than relying solely on interfaces above the SMO 17 level. In addition, services such as localization rely on timely information exchange. The proposed architecture and interfaces would allow a realization of localization techniques that rely on multiple radio access technologys and sensors and require a high frequency of information exchange compared to the approach relying on a service function in the 5G core to aggregate such information as proposed by 3GPP.

Integration of multiple radio access technologies is an ongoing activity in 3GPP and the O-RAN alliance from the 5G System perspective. In O-RAN, the SMO 17 is sometimes seen as a network-controller of sorts, in that it not only controls the 5G components but also the underlying fronthaul/midhaul/backhaul network envisioned as a software-defined network substrate and potentially other radio access technologys like WiFi. However, this coordination relies solely on the SMO 17 level, and there is no direct information exchange between radio access technology components or RIC-like controllers of different access technologies envisioned. The proposed architecture and interfaces would target interoperability and increased efficiency between different product lines potentially even coming from different companies, such that they would be part of the product specs of marketing efforts.

## Claims

1. Heterogeneous network (5) wherein the heterogeneous network (5) comprises a first network (4) according to a first radio access technology and a second network (8) according to a second radio access technology, the networks comprising a respective network controller,
**characterized in that**
the heterogeneous network (5) comprises a Heterogeneous network (5) controller (1) configured to
- receive first operation data (2) of the at least one of the networks according to the first of the Radio Access Technologies, wherein the first operation data (2) describe available network resource and/or requested network resource of the at least one of the networks according to the first of the Radio Access Technologies,
- receive second operation data (6) of at least one of the networks according to the second of the Radio Access Technologies, wherein the second operation data (6) describe available network resource and/or requested network resource of the at least one of the networks according to the second of the Radio Access Technologies,
- generate an orchestration policy (9) for resource management depending on the first operation data (2) and the second operation data (6),
- provide the orchestration policy (9) at least to the network controller of the first network (4),
the network controller of the first network (4) is configured to allocate the network resources of the first network (4) according to the orchestration policy (9).

2. Heterogeneous network (5) according to claim 1, **characterized in that** the Heterogeneous network (5) controller (1) is configured to provide the orchestration policy (9) to the network controller of the at least one second network (8), and the network controller of the at least one second network (8) is configured to allocate the network resources of the second network (8) according to the orchestration policy (9).

3. Heterogeneous network (5) according to claim 1 or 2, **characterized in that** one of the network controllers is configured as the Heterogeneous network (5) controller (1).

4. Heterogeneous network (5) according to claim 1 or 2, **characterized in that** the Heterogeneous network (5) controller (1) is configured as a group of network controllers.

5. Heterogeneous network (5) according to one of the preceding claims, **characterized in that** at least the first network (4) is structured according to ORAN-architecture wherein the Heterogeneous network (5) controller (1) is configured as a Network function of a near-real time RIC (19), of the first network (4).

6. Heterogeneous network (5) according to one of the preceding claims **characterized in that** heterogeneous network (5) controller (1) comprises
a near-real time heterogeneous network (5) controller (1) configured to generate a near-real time orchestration policy (9) of the orchestration policy (9) depending on the operation data provided by the network controllers of the networks, and
a non-real time heterogeneous network (5) controller (1) configured to formulate a non-real time orchestration policy (9) of the orchestration policy (9) depending on the operation data provided by the network controllers of the networks.

7. Heterogeneous network (5) according to one of the preceding claims **characterized in that** the at least one second network (8) is structured according to ORAN-architecture, wherein the at least one second network (8) comprises a near-real time RIC (19), wherein
the near-real time RIC (19) of the at least one second network (8) is connected to the near-real time RIC (19) of the first network (4) through a near-real time interface (I, SMx),
the near -real time RIC of the second network (8) is configured to provide near-real time operation data of at least one network to the near -real time RIC of the first network (4).

8. Heterogeneous network (5) according to one of the preceding claims **characterized in that** the at least one second network (8) comprises a non-real time RIC (18), wherein
the non-real time RIC (18) of the at least one second network (8) is connected to a non-real time RIC (18) of the first network (4) through a non-real time interface (I, SMx),
the non-real time RIC (18) of the second network (8) is configured to provide non-real time operation data of at least one network to the non -real time RIC of the first network (4) .

9. Heterogeneous network (5) according to one of the preceding claims **characterized in that** the first network (4) comprises a positioning network function in the near-real time RIC (19) of the first network (4), configured to locate devices in one of the networks and to provide locations of the devices to the heterogeneous network (5) controller (1).

10. Heterogeneous network (5) controller (1) configured to
- receive first operation data (2) of the at least one of the networks according to the first of the Radio Access Technologies, wherein the first operation data (2) describe available network resource and/or requested network resource of the at least one of the networks according to the first of the Radio Access Technologies,
- receive second operation data (6) of at least one of the networks according to the second of the Radio Access Technologies, wherein the second operation data (6) describe available network resource and/or requested network resource of the at least one of the networks according to the second of the Radio Access Technologies,
- generate an orchestration policy (9) for resource management depending on the first operation data (2) and the second operation data (6), and
- provide the orchestration policy (9) at least to the network controller of the first network (4).

11. Method to operate a heterogeneous network (5), the heterogeneous network (5) comprising a first network (4) according to a first radio access technology and at least one second network (8) according to a second radio access technology, wherein the first network (4) and the at least one second network (8) comprise respective network controllers, comprising steps of:
- receiving first operation data (2) of the first network (4) by a heterogeneous network (5) controller (1) of the heterogeneous network (5) wherein the first operation data (2) describe available network resource and/or requested network resource of the first network (4),
- receiving second operation data (6) of the second network (8) by the heterogeneous network (5) controller (1) of the heterogeneous network (5) wherein the second operation data (6) describe available network resource and/or requested network resource of the second network (8),
- generating an orchestration policy (9) for resource management depending on the first operation data (2) and the second operation data (6) by the heterogeneous network (5) controller (1),
- providing the orchestration policy (9) at least to the network controller of the first network (4) by the heterogeneous network (5) controller (1), and
- allocating network resources of the first network (4) according to the orchestration policy (9) by the network controller of the first network (4).
